# EUROPÄISCHE PATENTANMELDUNG

(11) **EP 4 142 016 A1**
(43) Veröffentlichungstag der Anmeldung: **01.03.2023**
(21) Anmeldenummer: 22188679.9
(22) Anmeldetag: 04.08.2022
(51) Int. Cl.: H01M 10/613, H01M 10/6556, B60L 50/64

(54) **KÜHLVORRICHTUNG ZUR KÜHLUNG EINES BATTERIEZELLSTAPELS UND BATTERIESYSTEM**

(30) Priorität: 25.08.2021 DE 102021209304
(71) Anmelder: Robert Bosch GmbH, 70442 Stuttgart (DE)
(72) Erfinder: Schmitt, Markus, 71732 Tamm (DE)

(57) **Zusammenfassung**

Die vorliegende Erfindung betrifft eine Kühlvorrichtung (10) zur Kühlung eines Batteriezellenstapels (100) mit einer Vielzahl an Batteriezellen (110), die Kühlvorrichtung (10) aufweisend einen Einlassanschluss (20) zur Einströmung von einem Kühlmedium (K) in die Kühlvorrichtung (10), einen Auslassanschluss (30) zur Ausströmung von dem Kühlmedium (K) aus der Kühlvorrichtung (10) und wenigstens einen Kühlkanal (40), wobei der Kühlkanal (40) im Strömungspfad des Kühlmediums (K) zwischen dem Einlassanschluss (20) und dem Auslassanschluss (30) angeordnet ist, wobei in dem Kühlkanal (40) wenigstens zwei Strömungseinsätze (50) angeordnet sind und die wenigstens zwei Strömungseinsätze (50) modular und flächig ausgestaltet sind. Ferner betrifft die Erfindung ein Batteriesystem (200), umfassend einen Batteriezellenstapel (100) mit einer Vielzahl an Batteriezellen (110) sowie eine Kühlvorrichtung (10).

## Beschreibung

### Stand der Technik

Die vorliegende Erfindung betrifft eine Kühlvorrichtung zur Kühlung eines Batteriezellstapels, insbesondere für ein Kraftfahrzeug. Ferner betrifft die Erfindung ein Batteriesystem mit einem Batteriezellstapel mit einer Vielzahl an Batteriezellen sowie einer Kühlvorrichtung.

Im bekannten Stand der Technik werden einzelne Batteriezellen zu Batteriemodulen zusammengeschaltet. Batteriemodule werden zu Batterien bzw. Batteriesystemen zusammengeschaltet. Aufgrund der Vielzahl an verschiedenen Fahrzeugbauräumen, sind variable Modulgrößen erforderlich, um den vorhandenen Bauraum optimal auszunutzen. Li-Ionen-, bzw. Li-Polymer-Batteriezellen erwärmen sich bedingt durch chemische Wandlungsprozesse vor allem bei der schnellen Energieabgabe bzw. -aufnahme. Je leistungsfähiger das Batteriepack ist, desto größer ist seine Erwärmung und damit einhergehend ein effizientes aktives Thermomanagementsystem. Dadurch lassen sich die Batteriezellen kühlen und heizen. Wobei die Batteriezellen überwiegend gekühlt werden müssen.

Die optimale Betriebstemperatur von Li-Ionen-Batteriesystemen beträgt ca. +5 °C bis +35 °C. Ab einer Betriebstemperatur von ca. +40 °C wird ihre Lebensdauer geringer. Um die Lebensdaueranforderung von ca. 8-10 Jahren zu erreichen, ist deshalb eine hinreichende thermische Konditionierung der Batterie erforderlich. Die Batteriezellen müssen unter allen Betriebszuständen in einem thermisch unkritischen Zustand unter +40 °C gehalten werden. Um einem Alterungsgleichlaufs der Batteriezellen zu erreichen, darf der Temperaturgradient von Batteriezelle zu Batteriezelle nur gering sein.

Die Batterie-Heizung und -Entwärmung geschieht heute überwiegend durch eine Flüssigkeitstemperierung mit einem Wasser/Glykol-Gemisch. Dieses wird durch Kanäle der unterhalb der Batteriemodule angeordneten Kühlplatten geleitet. Die Versorgung der Kühlplatten wird mit einer Kühlwasserverschlauchung mit entsprechenden weiteren Komponenten im Kühlkreislauf realisiert.

Nach dem Stand der Technik werden bei Kühlplatten Inneneinsätze als Turbulatoren eingesetzt. Nachteilig ist bei den bekannten Kanalstrukturen mit integrierten Turbulatoren, dass diese durch den Herstellungsprozess bedingt nur in bestimmten Größen darstellbar sind. Dabei liegen die Grenzen im Druckgussprozess, bei dem bestimmte Größen und Abstände der Turbulatoren nicht unterschritten werden können, da dies im Druckgusswerkzeug nicht darstellbar ist. Ferner sind die verwendeten Turbulatoren zumeist auf eine Kühlplatte bzw. ein Batteriesystem angepasst und nicht vielfältig einsetzbar.

### Offenbarung der Erfindung

Die Erfindung beansprucht eine Kühlvorrichtung mit den Merkmalen des unabhängigen Anspruchs 1. Ferner beansprucht die Erfindung einen Batteriezellenstapel mit den Merkmalen des unabhängigen Anspruchs 9. Weitere Vorteile und Details der Erfindung ergeben sich aus den Unteransprüchen, der Beschreibung und den Zeichnungen. Dabei gelten Merkmale, die im Zusammenhang mit der erfindungsgemäßen Kühlvorrichtung beschrieben sind, selbstverständlich auch im Zusammenhang mit dem erfindungsgemäßen Batteriezellenstapel und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt offenbart die Erfindung eine Kühlvorrichtung zur Kühlung eines Batteriezellenstapels mit einer Vielzahl an Batteriezellen, die Kühlvorrichtung aufweisend einen Einlassanschluss zur Einströmung von einem Kühlmedium in die Kühlvorrichtung, einen Auslassanschluss zur Ausströmung von dem Kühlmedium aus der Kühlvorrichtung und wenigstens einen Kühlkanal, wobei der Kühlkanal im Strömungspfad des Kühlmediums zwischen dem Einlassanschluss und dem Auslassanschluss angeordnet ist, wobei in dem Kühlkanal wenigstens zwei Strömungseinsätze angeordnet sind und die wenigstens zwei Strömungseinsätze modular, insbesondere identisch, und flächig oder im Wesentlichen flächig ausgestaltet sind.

Die Formulierung "X oder im Wesentlichen X" soll im Rahmen der Erfindung als mögliche, geringe Abweichung, beispielsweise aufgrund von Fertigungstoleranzen, Material- und/oder Prozesseigenschaften verstanden werden, ohne die zugrundeliegende, beabsichtigte Funktion des Merkmals zu verändern.

Eine flächige Ausgestaltung der wenigstens zwei Strömungseinsätze ist im Rahmen der Erfindung als eine hauptsächliche Erstreckung der konstruktiven Ausgestaltung der wenigstens zwei Strömungseinsätze entlang zwei Raumachsen zu verstehen. In der dritten Raumachse, anschaulich der Höhe der wenigstens zwei Strömungseinsätze, ist die Erstreckung der wenigstens zwei Strömungseinsätze deutlich geringer. Bei einer rein hypothetischen Annahme einer massiven Ausgestaltung der wenigstens zwei Strömungseinsätze wären die wenigstens zwei Strömungseinsätze plattenförmig ausgestaltet.

Die Strömungseinsätze sind erfindungsgemäß derart ausgestaltet, dass die Strömung des Kühlmediums innerhalb des Kühlkanals durch die Strömungseinsätze verwirbelt wird und die Oberfläche zur Wärmeübertragung vergrößert wird. Somit wird durch die Strömungseinsätze eine Kühlleistung der Kühlvorrichtung vorteilhaft beeinflusst. Bevorzugt können die Strömungseinsätze die Wärme aus der umgebenden Kühlkanalstruktur zumindest teilweise aufnehmen und zusätzlich an das Kühlmedium übertragen. Die modulare, insbesondere identische Ausgestaltung der wenigstens zwei Strömungseinsätze ermöglicht vorteilhaft, dass jeder Strömungseinsatz an jede vorgesehene Stelle in dem Kühlkanal für einen Strömungseinsatz eingesetzt werden kann. Folglich ist für eine Vielzahl an unterschiedlich ausgestalteten Kühlvorrichtungen lediglich eine Sorte von modularen Strömungseinsätzen erforderlich. Eine Fertigung der modularen Strömungseinsätze und damit der Kühlvorrichtungen wird somit deutlich vereinfacht und im Kosten- und Zeitaufwand reduziert. Die Strömungseinsätze sind bevorzugt aus einem vorteilhaft wärmeleitenden Metall gefertigt. Die modularen Strömungseinsätze bestehen bevorzugt aus einer zum Hartlöten geeigneten Aluminiumlegierung mit beidseitiger Lotplattierung. Optional sind der Einlassanschluss und der Auslassanschluss auch aus einer Aluminiumlegierung ausgeführt und werden bei Verwendung von Lötringen im gleichen Prozess mitverlötet. Dies spart einen zusätzlichen Arbeitsschritt und führt zu einem Kostenvorteil. Durch die Strömungseinsätze erfolgt eine Optimierung der wärmeübertragenden Fläche im Kühlkanal, insbesondere im Bereich der Zellentwärmung, da die Strömungseinsätze mit dem umgebenden Material wärmeübertragend verbunden und/oder kontaktiert ist. Die Strömungseinsätze werden bevorzugt nur im Bereich der Zellentwärmung eingesetzt. Die restlichen Bereiche werden im später beschriebenen Druckgussbauteil, insbesondere Grundkörper, als Strömungsumleitbereiche (Ein- / Ausström- und Umlenkbereich) ausgebildet, da hier eine geringere bis keine Wärmeübertragung erforderlich ist. Dies reduziert die Anzahl der benötigten Strömungseinsätze auf ein Minimum, was zu einem Kostenvorteil führt. Eine derart ausgestaltete Kühlvorrichtung zur Kühlung eines Batteriezellenstapels ist besonders vorteilhaft, da eine Kühlung des Batteriezellenstapels besonders einfach und kostengünstig ermöglicht wird.

Gemäß einer bevorzugten Weiterentwicklung der Erfindung kann bei einer Kühlvorrichtung vorgesehen sein, dass die wenigstens zwei Strömungseinsätze aus einem Blech gewalzt und/oder gestanzt sind und/oder der Kühlkanal eine Kanallänge und die wenigstens zwei Strömungseinsätze jeweils eine Einsatzlänge aufweisen, wobei die Kanallänge einem ganzzahligen Vielfachen oder im Wesentlichen einem ganzzahligen Vielfachen der Einsatzlänge entspricht. Dass die Kanallänge einem ganzzahligen Vielfachen oder im Wesentlichen einem ganzzahligen Vielfachen der Einsatzlänge entspricht, ist im Rahmen der Erfindung derart zu verstehen, dass anschaulich beschrieben in dem Kühlkanal eine ganzzahlige Menge an Strömungseinsätzen positionssicher eingelegt und/oder angeordnet werden kann, insbesondere wobei dabei keine Restlänge des Kühlkanals übrig bleibt und/oder in einem Kühlkanalabschnitt keine Strömungseinsätze angeordnet sind. Für die Berücksichtigung von später beschriebenen Positionierungsvorrichtungen und Fertigungstoleranzen weist der Kühlkanal in der Praxis somit eine etwas größere Länge als ein ganzzahliges Vielfaches der Einsatzlänge eines Strömungseinsatzes auf. Eine modulare Ausgestaltung der Strömungseinsätze ist ein enormer Kosten- und Materialvorteil bei der Fertigung von Kühlvorrichtungen. Das Teilungsmaß am Zellstapel, also der Abstand zwischen zwei Zellen mit einer Positionierungsvorrichtung zwischen diesen Zellen liegt bevorzugt in gleicher Größenordnung, sodass eine Kühlung mit modularen Strömungseinsätze vorteilhaft ermöglicht wird. Der Bereich der erfindungsgemäß als Kanallänge definiert ist, wird anschaulich in Segmente unterteilt, sodass die unterschiedlichen Systeme, insbesondere Gehäuselängen durch Variation der Anzahl an Strömungseinsätzen ermöglicht werden können. Bevorzugt beträgt die Teilung von Strömungseinsatz zu Strömungseinsatz 36.5mm. Dabei bleiben bevorzugt die Länge eines Ein- und Ausströmbereiches und eines später beschriebenen Umlenkkanals konstant für alle Gehäuselängen. Das hat den Vorteil, dass die Einströmung und Ausströmung des Kühlmittels immer gleich bleibt für alle Gehäuselängen. Diese Ein- und Ausströmbereiche und ein Umlenkkanal sollen im Rahmen der Erfindung nicht Bestandteil der Kühlkanallänge sein. Die Kühlkanallänge soll im Rahmen der Erfindung lediglich die bevorzugt geraden Abschnitte zum Einlegen und Positionieren der Strömungseinsätze umfassen.

Gemäß einer bevorzugten Weiterentwicklung der Erfindung kann bei einer Kühlvorrichtung vorgesehen sein, dass jeder der wenigstens zwei Strömungseinsätze eine Vielzahl an Strömungsstörvorrichtungen umfasst, insbesondere wobei die wenigstens zwei Strömungseinsätze jeweils aus wellenförmigen, zueinander versetzten Streifen bestehen, und/oder dass die wenigstens zwei Strömungseinsätze jeweils obere und/oder untere Anlageflächen umfassen, insbesondere wobei die oberen und unteren Anlageflächen zueinander parallel sind. Die wellenförmige Ausgestaltung der Strömungseinsätze kann gleichmäßig oder variierend ausgestaltet sein. Die Wellen können schräge oder vertikale Übergänge zwischen den oberen und unteren Anlageflächen aufweisen. Bevorzugt wird ein Strömungseinsatz aus einem Stück Blech gewalzt. Die daraus resultierenden wellenförmigen, zueinander versetzten Streifen sind bevorzugt weiterhin einstückig ausgestaltet und folglich stoffschlüssig miteinander verbunden. Bevorzugt weisen die Strömungseinsätze auch an den Rändern gleichmäßige Anlageflächen, beispielsweise zur stoffschlüssigen Anbindung an den Kühlkanal auf. Ein derart ausgestalteter Strömungseinsatz ist besonders kostengünstig und in geringer Zeit zu fertigen und ermöglicht ferner eine vorteilhafte Verwirbelung der Strömung in dem Kühlkanal und eine Vergrößerung der Oberfläche zur verbesserten Wärmeübertragung an und/oder von dem Kühlmedium.

Gemäß einer bevorzugten Weiterentwicklung der Erfindung kann bei einer Kühlvorrichtung vorgesehen sein, dass der Kühlkanal Positionierungsvorrichtungen zur Positionierung der wenigstens zwei Strömungseinsätze in dem Kühlkanal umfasst. Die Positionierung und/oder Ausrichtung der Strömungseinsätze wird durch die Positionierungsvorrichtungen, insbesondere in Verbindung mit der konstruktiven Ausgestaltung des Kühlkanals ermöglicht. Bevor der Kühlkanal der Kühlvorrichtung konstruktiv verschlossen wird, werden die Strömungseinsätze in den Kühlkanal der Kühlvorrichtung eingelegt. Dazu sind an der Kühlvorrichtung Positionierungsvorrichtungen vorgesehen und/oder integriert, die die Montage der Strömungseinsätze vereinfachen. Für innere Strömungseinsätze sind bevorzugt jeweils vier solcher Positionierungsvorrichtungen pro Strömungseinsatz vorgesehen. Die äußeren Strömungseinsätze werden bevorzugt jeweils über zwei solcher Positionierungsvorrichtungen und die Wände der Kühlvorrichtung positioniert. Dabei ist bevorzugt ein Abstand zwischen den Positionierungsvorrichtungen und den Strömungseinsätzen vorgesehen, um Bauteiltoleranzen ausgleichen zu können. Eine Fertigung einer derart ausgestalteten Kühlvorrichtung ist besonders einfach, da eine Positionierung der Strömungseinsätze durch die Positionierungsvorrichtungen mit einfachen Mitteln mit geringer Fehleranfälligkeit ausgeführt werden kann.

Gemäß einer bevorzugten Weiterentwicklung der Erfindung kann bei einer Kühlvorrichtung vorgesehen sein, dass die Kühlvorrichtung einen Grundkörper, insbesondere ein Gehäuse, aufweist, wobei die wenigstens zwei Strömungseinsätze formschlüssig und/oder stoffschlüssig mit dem Grundkörper verbunden sind. Nachdem, wie zuvor beschrieben, die Strömungseinsätze eingelegt sind, kann ein später beschriebenes Abdeckelement aufgelegt bzw. der Kühlkanal verschlossen werden. Die Bauteile werden bevorzugt zum stoffschlüssigen Verbinden, insbesondere Hartlöten in einem Ofen, miteinander verspannt. Durch das Hartlöten ergeben sich stoffschlüssige Verbindungen zwischen den Auflageflächen der Kühlvorrichtung am umlaufenden geschlossenen Rand und dem Abdeckelement sowie zwischen dem Abdeckelement und den Strömungsleitkonturen der Kühlvorrichtung. Außerdem entstehen stoffschlüssige Verbindungen zwischen Strömungseinsatz und Kühlkanalboden der Kühlvorrichtung sowie zwischen Strömungseinsatz und Abdeckelement. Der Grundkörper ist bevorzugt als Druckgussgehäuse ausgestaltet. Insbesondere ist der Grundkörper zur Aufnahme des Batteriezellenstapels ausgestaltet. Um eine vorteilhaft ebene Auflagefläche am Gehäuse zur Aufnahme des Abdeckelementes zu erreichen kann diese Fläche mechanisch nachbearbeitet, beispielsweise überfräst werden. Für den Grundkörper wird bevorzugt eine Druckgusslegierung eingesetzt, die hartlötbar ist. Eine geeignete Druckgusslegierung ist z.B. AlMn1,6 da sie über den höchsten Schmelzpunkt der Aluminiumdruckgusslegierungen verfügt und so beim Lötprozess mit einer anderen fließfähigen Aluminiumlegierung noch fest ist und verlötet werden kann. Die Höhe der modularen Strömungseinsätze ist bevorzugt geringfügig höher als die Kühlkanalhöhe und damit ergibt sich ein Abstand zwischen dem Grundkörper und dem Abdeckelement. Durch ein Verformen der Strömungseinsätze beim Spannen im Lötgestell zum Verschließen des Abstands zwischen dem Grundkörper und dem Abdeckelement wird eine sichere Verlötung zwischen Grundkörper, Strömungseinsätze und Abdeckelement erreicht.

Gemäß einer bevorzugten Weiterentwicklung der Erfindung kann bei einer Kühlvorrichtung vorgesehen sein, dass der Kühlkanal stoffschlüssig in dem Grundkörper ausgestaltet ist und/oder der Kühlkanal und/oder der Grundkörper mit einem Abdeckelement verschlossen sind, insbesondere wobei das Abdeckelement formschlüssig und/oder stoffschlüssig mit dem Grundkörper und/oder den wenigstens zwei Strömungseinsätzen verbunden ist. Eine einstückige Ausgestaltung des Kühlkanals in dem Grundkörper ermöglicht eine besonders effiziente Bauraumnutzung und somit eine vorteilhaft kompakte Kühlvorrichtung und/oder Batteriesystem. Die Strömungseinsätze sind bevorzugt mit dem Grundkörper als auch mit dem Abdeckelement stoffschlüssig verbunden, insbesondere verlötet. Dabei wird das Abdeckelement bevorzugt durch einen Positionierrand am Druckgussgehäuse in die richtige Lage geführt und liegt dann an den Auflageflächen, beispielsweise in Form von Lötflächen, am Grundkörper auf. Die Strömungseinsätze sind bevorzugt im Kühlkanal am Boden, am Rand sowie am Abdeckelement stoffschlüssig verbunden. Das Abdeckelement und/oder der Grundkörper weist bevorzugt ein Poka Yoke Element auf, um eine fehlerhafte Positionierung und/oder Befestigung des Abdeckelements zu vermeiden. Eine derart ausgestaltete Kühlvorrichtung ermöglicht, dass die Wärme durch die Wand am Grundkörper über die Strömungseinsätze in das Abdeckelement geleitet wird. Dadurch trägt das Abdeckelement mit seiner kompletten Oberfläche auf der Kühlmittelseite zur Zellentwärmung bei. Das Abdeckelement besteht bevorzugt ebenfalls aus einer Aluminiumlegierung die zum Löten geeignet ist. Dazu ist das Abdeckelement bevorzugt einseitig mit einer geeigneten Al-Legierung lotplattiert. Die lotplattierte Seite zeigt in Richtung des Druckgussgehäuses. Dies wird beispielsweise sichergestellt, indem das Gehäuseelement und das Abdeckelement über das besagte Poka Yoke Feature verfügen. Dieses ist bevorzugt am Grundkörper integriert und ist außermittig zur Mittelachse angeordnet. Beim Fügen des Abdeckelementes mit dem Grundkörper zeigt die Lotplattierung dann immer in Richtung Gehäuse. Die Blechdicke der Strömungseinsätze ist im Vergleich zum Abdeckelement bevorzugt deutlich dünner, ausgeführt, insbesondere höchstens 50, 25, 15 oder 10% der Blechdicke des Abdeckelements, damit sich die Strömungseinsätze beim Spannen verformen können und nicht zu einer Verformung des Abdeckelements führen.

Gemäß einer bevorzugten Weiterentwicklung der Erfindung kann bei einer Kühlvorrichtung vorgesehen sein, dass die Kühlvorrichtung wenigstens einen Umlenkkanal umfasst, wobei der Umlenkkanal den Strömungspfad des Kühlmediums um 180° oder im Wesentlichen um 180° umlenkt, insbesondere wobei der Umlenkkanal auf einer ersten Seite der Kühlvorrichtung und der Einlassanschluss und der Auslassanschluss auf einer zweiten Seite der Kühlvorrichtung angeordnet sind, wobei die erste Seite und zweite Seite der Kühlvorrichtung gegenüberliegend angeordnet sind. Ein Umlenkkanal ermöglicht somit vorteilhaft eine Verlängerung des Kühlkanals mit einfachen Mitteln. Anschaulich kann der Strömungspfad des Kühlmediums durch einen Umlenkkanal U-förmig ausgestaltet werden. Ebenfalls sind eine Vielzahl an Umlenkkanälen möglich, sodass ein schlangenförmiger Strömungspfad des Kühlmediums erzeugt wird. Vorteilhaft ist es, wenn der Einlassanschluss und Auslassanschluss an einer ersten Seite der Kühlvorrichtung, und wenigstens ein Umlenkkanal an einer zweiten, gegenüberliegenden Seite der Kühlvorrichtung angeordnet sind.

Gemäß einer bevorzugten Weiterentwicklung der Erfindung kann bei einer Kühlvorrichtung vorgesehen sein, dass die Kühlvorrichtung einen zentralen Trennsteg umfasst, wobei der Trennsteg einen Abschnitt des Kühlkanals im Strömungspfad vor dem wenigstens einen Umlenkkanal von einem Abschnitt des Kühlkanals im Strömungspfad nach dem wenigstens einen Umlenkkanal trennt. Die Abschnitte des Kühlkanals vor und nach dem Umlenkkanal können im Rahmen der Erfindung auch als zwei Kühlkanäle verstanden werden. Bevorzugt wird der mittlere Steg am Grundkörper und/oder am Abdeckelement ebenfalls verlötet. Bevorzugt ist der Trennsteg einteilig mit dem Grundkörper ausgestaltet. Ferner ist bevorzugt, wenn der Trennsteg wenigstens eine zuvor beschriebene Positionierungsvorrichtung zur Positionierung der Strömungseinsätze umfasst. Eine weitere Optimierung der Strömung wird durch das Anbinden der Positionierungsvorrichtungen an den Trennsteg realisiert. Durch den Trennsteg wird der Strömungspfad bevorzugt als U-Flow ausgeführt. Dabei strömt das Kühlmedium durch einen Einlassanschluss und einen Auslassanschluss auf einer Gehäuseseite in den Kühlkanal hinein und wieder hinaus. Um eine direkte Strömung (Kurzschlussströmung) zwischen Einlassanschluss und Auslassanschluss zu vermeiden, wird der Trennsteg der Kühlvorrichtung bevorzugt zum Außenrand stoffschlüssig bevorzugt mittels Hartlötens mit dem Abdeckelement verbunden.

Gemäß einem zweiten Aspekt offenbart die Erfindung ein Batteriesystem mit einem Batteriezellenstapel mit einer Vielzahl an Batteriezellen sowie einer Kühlvorrichtung gemäß dem ersten Aspekt. Bei dem beschriebenen Batteriesystem ergeben sich sämtliche Vorteile, die bereits zu der Kühlvorrichtung gemäß dem ersten Aspekt der Erfindung beschrieben worden sind. Das Batteriesystem weist bevorzugt einen Grundkörper, insbesondere ein Gehäuse, auf. Der Grundkörper des Batteriesystems kann dem Grundkörper der Kühlvorrichtung entsprechen, sodass dieser Grundkörper beide Vorrichtungen umfasst und/oder aufnimmt. Bevorzugt sind die wenigstens zwei Strömungseinsätze formschlüssig und/oder stoffschlüssig mit dem Grundkörper verbunden und/oder der Kühlkanal ist stoffschlüssig in dem Grundkörper ausgestaltet, insbesondere wobei der Kühlkanal und/oder der Grundkörper mit einem Abdeckelement, insbesondere stoffschlüssig, verschlossen sind.

Gemäß einer bevorzugten Weiterentwicklung der Erfindung kann bei einem Batteriesystem vorgesehen sein, dass das Batteriesystem wenigstens ein Relay umfasst, wobei das wenigstens eine Relay im Bereich des wenigstens einen Umlenkkanals angeordnet ist und/oder wobei der Batteriezellenstapel im Bereich des Kühlkanals angeordnet ist. Ein Relay weist einen geringeren Wärme- und/oder Kühlbedarf als die Batteriezellen auf. Ein derartig ausgestaltetes Batteriesystem ist besonders vorteilhaft, da für das Relay im Bereich des Umlenkkanals eine vorteilhaft ausreichende Wärmeübertragung bereitgestellt wird und somit ein sicherer Betrieb und eine hohe Lebensdauer des Relays zusätzlich sichergestellt werden kann.

Eine erfindungsgemäße Kühlvorrichtung sowie ein Batteriesystem werden nachfolgend anhand von Zeichnungen näher erläutert. Es zeigen jeweils schematisch:
- Figur 1: in einer perspektivischen Ansicht eine Explosionsdarstellung einer Kühlvorrichtung mit einem Grundkörper, einem Kühlkanal in dem Grundkörper, einer Vielzahl an Strömungseinsätzen in dem Kühlkanal und einem Abdeckelement,
- Figur 2: in einer perspektivischen Ansicht ein Strömungseinsatz, und
- Figur 3: in einer seitlichen Schnittansicht ein Batteriesystem mit einer Kühlvorrichtung und einem Batteriezellenstapel mit einer Vielzahl an Batteriezellen.

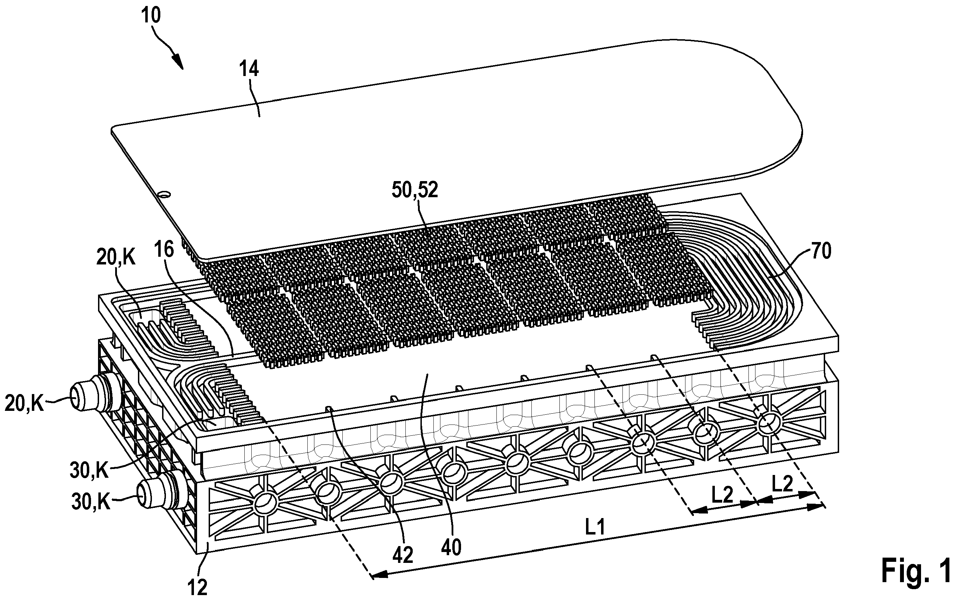

Elemente mit gleicher Funktion und Wirkungsweise sind in den Fig. 1 bis 3 jeweils mit denselben Bezugszeichen versehen.

In Fig. 1 ist schematisch in einer perspektivischen Ansicht eine Explosionsdarstellung einer Kühlvorrichtung 10 mit einem Grundkörper 12, einem Kühlkanal 40 in dem Grundkörper 12, einer Vielzahl an Strömungseinsätzen 50 in dem Kühlkanal 40 und einem Abdeckelement 14 gezeigt. Die Kühlvorrichtung 10 weist einen Einlassanschluss 20 zur Einströmung von einem Kühlmedium K in die Kühlvorrichtung 10, einen Auslassanschluss 30 zur Ausströmung von dem Kühlmedium K aus der Kühlvorrichtung 10 und zwei Kühlkanäle 40 auf. Die Kühlkanäle 40 sind im Strömungspfad des Kühlmediums K zwischen dem Einlassanschluss 20 und dem Auslassanschluss 30. In den Kühlkanälen 40 sind eine Vielzahl, hier jeweils sieben, Strömungseinsätze 50 angeordnet, wobei die Strömungseinsätze 50 modular und flächig ausgestaltet sind. Die Strömungseinsätze 50 sind aus einem Blech gewalzt und gestanzt. Jeder Kühlkanal 40 weist eine Kanallänge L1 und die Strömungseinsätze 50 weisen jeweils eine Einsatzlänge L2 auf, wobei die Kanallänge L1 im Wesentlichen einem ganzzahligen Vielfachen der Einsatzlänge L2 entspricht. Der Kühlkanal 40 umfasst Positionierungsvorrichtungen 42 zur Positionierung der Strömungseinsätze 50 in dem Kühlkanal 40. Die Kühlvorrichtung 10 weist einen Grundkörper 12 in Form eines Gehäuses auf, wobei die Strömungseinsätze 50 stoffschlüssig mit dem Grundkörper 12 verbunden sind. Durch die Explosionsdarstellung ist die stoffschlüssige Verbindung natürlich nicht sichtbar. Der Kühlkanal 40 ist stoffschlüssig in dem Grundkörper 12 ausgestaltet und der Kühlkanal 40 und der Grundkörper 12 sind mit dem Abdeckelement 14 verschlossen, wobei das Abdeckelement 14 stoffschlüssig mit dem Grundkörper 12 und den Strömungseinsätzen 50 verbunden ist. Die Kühlvorrichtung 10 umfasst ferner einen Umlenkkanal 70, wobei der Umlenkkanal 70 den Strömungspfad des Kühlmediums K um 180° umlenkt, wobei der Umlenkkanal 70 auf einer ersten Seite der Kühlvorrichtung 10 und der Einlassanschluss 20 und der Auslassanschluss 30 auf einer zweiten Seite der Kühlvorrichtung 10 angeordnet sind, wobei die erste Seite und zweite Seite der Kühlvorrichtung 10 gegenüberliegend angeordnet sind. Die Kühlvorrichtung 10 umfasst einen zentralen Trennsteg 16, wobei der Trennsteg 16 einen ersten Kühlkanal 40 im Strömungspfad vor dem wenigstens einen Umlenkkanal 70 von einem zweiten Kühlkanal 40 im Strömungspfad nach dem wenigstens einen Umlenkkanal 70 trennt.

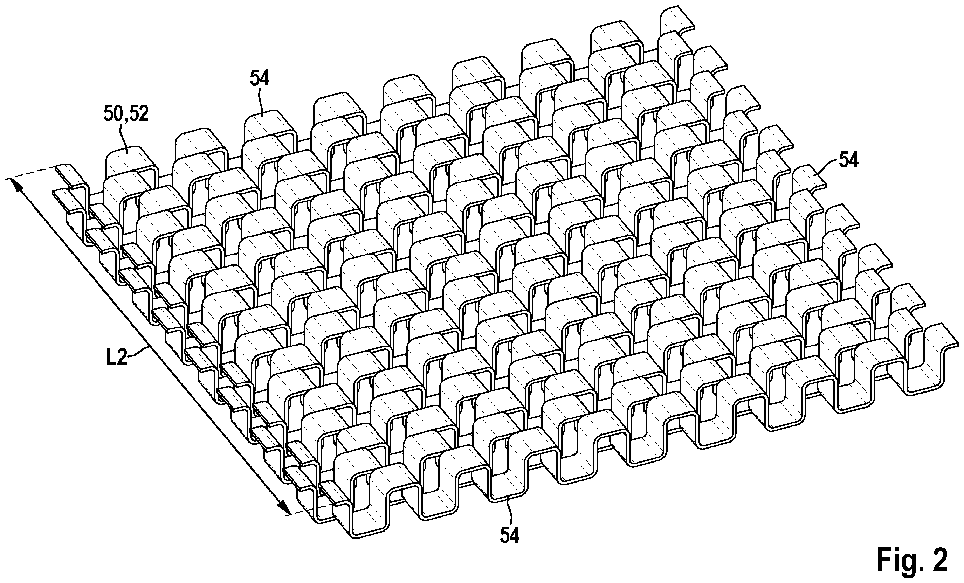

In Fig. 2 ist schematisch in einer perspektivischen Ansicht ein Strömungseinsatz 50 gezeigt. Der Strömungseinsatz 50 umfasst eine Vielzahl an Strömungsstörvorrichtungen 52, wobei der Strömungseinsatz 50 aus wellenförmigen, zueinander versetzten Streifen besteht und wobei der Strömungseinsatz 50 obere und untere Anlageflächen 54 umfasst, wobei die oberen und unteren Anlageflächen 54 zueinander parallel sind. Die wellenförmige Ausgestaltung der Strömungseinsätze 50 ist gleichmäßig ausgestaltet. Die Wellen weisen im Wesentlichen vertikale Übergänge zwischen den oberen und unteren Anlageflächen 54 auf. Der Strömungseinsatz 50 ist aus einem Stück Blech gewalzt. Die daraus resultierenden wellenförmigen, zueinander versetzten Streifen sind einstückig ausgestaltet und folglich stoffschlüssig miteinander verbunden. Der Strömungseinsatz 50 weist auch an den Rändern, hier rechts und links, gleichmäßige Anlageflächen zur stoffschlüssigen Anbindung an den Kühlkanal 40 (nicht gezeigt) auf. Ein derart ausgestalteter Strömungseinsatz 50 ist besonders kostengünstig und in geringer Zeit zu fertigen und ermöglicht ferner eine vorteilhafte Verwirbelung der Strömung in dem Kühlkanal 40 (nicht gezeigt) und eine Vergrößerung der Oberfläche zur verbesserten Wärmeübertragung an und/oder von dem Kühlmedium K (nicht gezeigt). Der Strömungseinsatz 50 weist eine Einsatzlänge L2 auf.

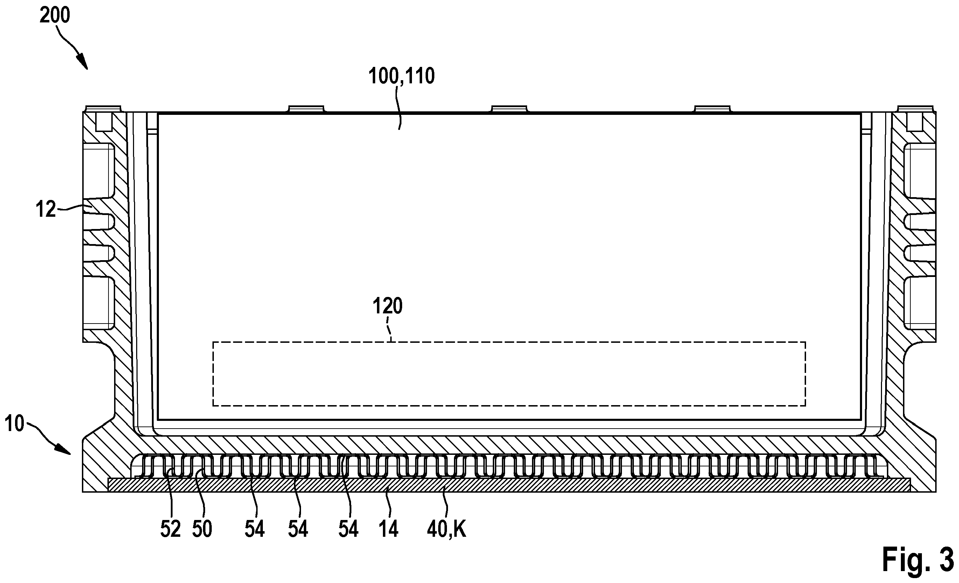

In Fig. 3 ist schematisch in einer seitlichen Schnittansicht ein Batteriesystem 200 mit einer Kühlvorrichtung 10 und einem Batteriezellenstapel 100 mit einer Vielzahl an Batteriezellen 110 gezeigt. Die Kühlvorrichtung 10 ist zur Kühlung des Batteriezellenstapels 100 mit einer Vielzahl an Batteriezellen 110 ausgestaltet. Das Batteriesystem 200 umfasst ferner ein Relay 120. Das Relay 120 ist in Fig. 3 gestrichelt dargestellt, da es in der Bildebene hinter den Batteriezellen 110 angeordnet ist. Das Relay 120 ist im Bereich des Umlenkkanals 70 (nicht gezeigt) angeordnet. Der Batteriezellenstapel 100 ist im Bereich des Kühlkanals 40 angeordnet. Das Relay 120 weist einen geringeren Wärme- und/oder Kühlbedarf als die Batteriezellen 110 auf. Ein derartig ausgestaltetes Batteriesystem 200 ist besonders vorteilhaft, da für das Relay 120 im Bereich des Umlenkkanals 70 (nicht gezeigt) eine vorteilhaft ausreichende Wärmeübertragung bereitgestellt wird und somit ein sicherer Betrieb und eine hohe Lebensdauer des Relays 120 zusätzlich sichergestellt werden kann. Das Batteriesystem 200 weist einen Grundkörper 12 in Form eines Gehäuses auf. Der Grundkörper 12 des Batteriesystems 200 entspricht dem Grundkörper 12 der Kühlvorrichtung 10, sodass der Grundkörper 12 beide Vorrichtungen umfasst und aufnimmt. Die Strömungseinsätze 50 sind stoffschlüssig mit dem Grundkörper 12 verbunden und der Kühlkanal 40 ist stoffschlüssig in dem Grundkörper 12 ausgestaltet. Der Kühlkanal 40 und der Grundkörper 12 sind mit dem Abdeckelement 14 stoffschlüssig verschlossen.

## Patentansprüche

1. Kühlvorrichtung (10) zur Kühlung eines Batteriezellenstapels (100) mit einer Vielzahl an Batteriezellen (110), die Kühlvorrichtung (10) aufweisend einen Einlassanschluss (20) zur Einströmung von einem Kühlmedium (K) in die Kühlvorrichtung (10), einen Auslassanschluss (30) zur Ausströmung von dem Kühlmedium (K) aus der Kühlvorrichtung (10) und wenigstens einen Kühlkanal (40), wobei der Kühlkanal (40) im Strömungspfad des Kühlmediums (K) zwischen dem Einlassanschluss (20) und dem Auslassanschluss (30) angeordnet ist,
**dadurch gekennzeichnet,**
**dass** in dem Kühlkanal (40) wenigstens zwei Strömungseinsätze (50) angeordnet sind und die wenigstens zwei Strömungseinsätze (50) modular und flächig ausgestaltet sind.

2. Kühlvorrichtung (10) nach Anspruch 1,
**dadurch gekennzeichnet,**
**dass** die wenigstens zwei Strömungseinsätze (50) aus einem Blech gewalzt und/oder gestanzt sind und/oder
der Kühlkanal (40) eine Kanallänge (L1) und die wenigstens zwei Strömungseinsätze (50) jeweils eine Einsatzlänge (L2) aufweisen, wobei die Kanallänge (L1) einem ganzzahligen Vielfachen der Einsatzlänge (L2) entspricht.

3. Kühlvorrichtung (10) nach einem der vorangegangenen Ansprüche,
**dadurch gekennzeichnet,**
**dass** jeder der wenigstens zwei Strömungseinsätze (50) eine Vielzahl an Strömungsstörvorrichtungen (52) umfasst, insbesondere wobei die wenigstens zwei Strömungseinsätze (50) jeweils aus wellenförmigen, zueinander versetzten Streifen bestehen, und/oder
**dass** die wenigstens zwei Strömungseinsätze (50) jeweils obere und/oder untere Anlageflächen (54) umfasst, insbesondere wobei die oberen und unteren Anlageflächen (54) zueinander parallel sind.

4. Kühlvorrichtung (10) nach einem der vorangegangenen Ansprüche,
**dadurch gekennzeichnet,**
**dass** der Kühlkanal (40) Positionierungsvorrichtungen (42) zur Positionierung der wenigstens zwei Strömungseinsätze (50) in dem Kühlkanal (40) umfasst.

5. Kühlvorrichtung (10) nach einem der vorangegangenen Ansprüche,
**dadurch gekennzeichnet,**
**dass** die Kühlvorrichtung (10) einen Grundkörper (12), insbesondere ein Gehäuse, aufweist, wobei die wenigstens zwei Strömungseinsätze (50) formschlüssig und/oder stoffschlüssig mit dem Grundkörper (12) verbunden sind.

6. Kühlvorrichtung (10) nach Anspruch 5,
**dadurch gekennzeichnet,**
**dass** der Kühlkanal (40) stoffschlüssig in dem Grundkörper (12) ausgestaltet ist und/oder der Kühlkanal (40) und/oder der Grundkörper (12) mit einem Abdeckelement (14) verschlossen sind, insbesondere wobei das Abdeckelement (14) formschlüssig und/oder stoffschlüssig mit dem Grundkörper (12) und/oder den wenigstens zwei Strömungseinsätzen (50) verbunden ist.

7. Kühlvorrichtung (10) nach einem der vorangegangenen Ansprüche,
**dadurch gekennzeichnet,**
**dass** die Kühlvorrichtung (10) wenigstens einen Umlenkkanal (70) umfasst, wobei der Umlenkkanal (70) den Strömungspfad des Kühlmediums (K) um 180° umlenkt, insbesondere wobei der Umlenkkanal (70) auf einer ersten Seite der Kühlvorrichtung (10) und der Einlassanschluss (20) und der Auslassanschluss (30) auf einer zweiten Seite der Kühlvorrichtung (10) angeordnet sind, wobei die erste Seite und zweite Seite der Kühlvorrichtung (10) gegenüberliegend angeordnet sind.

8. Kühlvorrichtung (10) nach Anspruch 7,
**dadurch gekennzeichnet,**
**dass** die Kühlvorrichtung (10) einen zentralen Trennsteg (16) umfasst, wobei der Trennsteg (16) einen Abschnitt des Kühlkanals (40) im Strömungspfad vor dem wenigstens einen Umlenkkanal (70) von einem Abschnitt des Kühlkanals (40) im Strömungspfad nach dem wenigstens einen Umlenkkanal (70) trennt.

9. Batteriesystem (200), umfassend einen Batteriezellenstapel (100) mit einer Vielzahl an Batteriezellen (110) sowie eine Kühlvorrichtung (10),
**dadurch gekennzeichnet,**
**dass** die Kühlvorrichtung (10) nach einem der vorangegangenen Ansprüche ausgestaltet ist.

10. Batteriesystem (200) nach Anspruch 9,
**dadurch gekennzeichnet,**
**dass** das Batteriesystem (200) wenigstens ein Relay (120) umfasst, wobei das wenigstens eine Relay (120) im Bereich des wenigstens einen Umlenkkanals (70) angeordnet ist und/oder wobei der Batteriezellenstapel (100) im Bereich des Kühlkanals (40) angeordnet ist.
